# EUROPEAN PATENT APPLICATION

(11) **EP 1 763 217 A1**
(43) Date of publication of application: **14.03.2007**
(21) Application number: 06254358.2
(22) Date of filing: 18.08.2006
(51) Int. Cl.: H04N 1/00, H04N 5/232

(54) **Digital Camera and method to display an image to be deleted in its entirety before deletion**

(30) Priority: 07.09.2005 JP 2005258982
(71) Applicant: SONY CORPORATION, Tokyo (JP)
(72) Inventor: Okazaki, Takashi, Sony Corporation, Tokyo (JP)
(74) Representative: Davies, Simon Robert

(57) **Abstract**

An image signal processing device includes: an image data generating unit which generates first reproduction image data displayed at the time of normal reproduction and second reproduction image data displayed in a display form different from that used at the time of the normal reproduction by performing a predetermined process on original image data or the first reproduction image data; a displaying unit which selectively displays the first reproduction image data and the second reproduction image data; and a controlling unit which allows the first reproduction image data to be displayed on the displaying unit and allows the original image data to be in a deletable state, when the second reproduction image data is displayed on the displaying unit and deletion is instructed.

## Description

The present invention relates to an image signal processing device and an image signal processing method.

A mechanism having a pickup function, such as a digital camera, a digital video camera or a mobile phone having a camera function, includes a displaying unit including a liquid crystal display (LCD) or an organic electroluminescence (EL) device. For example, using the displaying unit, the picture composition of a subject is determined upon photographing or image data is displayed immediately after photographing. Recently, for example, image data photographed in the past or image data photographed by the other mechanism may be displayed by mounting a removable memory in the above-described mechanism and reading image data in the memory. When the image data is displayed on the displaying unit, a technology of magnifying and reproducing a portion of the image data has been suggested.

In JP-A-2000-232598, an electronic still camera capable of changing a region which is magnified and reproduced in a magnification/reproduction mode is disclosed.

However, since the record capacity of a record medium for recording image data is finite, unnecessary image data in the record medium is properly deleted. For example, image data is read from the record medium and magnified and reproduced using a magnification/reproduction mode. Then, it is checked whether focusing is done through details of the magnified and reproduced image data. Next, it is determined whether the image data is stored or not and a deleting process for deleting unnecessary image data is performed.

When a deletion key or the like is manipulated in a state that the image data is magnified and reproduced in the magnification/reproduction mode, the deleting process is performed to delete the image data from the record medium. Only by manipulating the deletion key or the like, it is possible to easily delete the image data from the record medium. However, since the magnified and reproduced image data is a portion of original image data, the image data may be deleted by mistake without considering the contents of the original image data. In order to avoid this problem, when the image data is inhibited from being deleted in the magnification/reproduction mode, the original image data is reproduced in a normal reproduction mode and then the deleting process is performed, thereby increasing the number of the manipulating steps. Accordingly, it may take much time to delete the unnecessary image data.

Various respective aspects and features of the invention are defined in the appended claims. Features from the dependent claims may be combined with features of the independent claims as appropriate and not merely as explicitly set out in the claims.

Accordingly, the approach described herein provides an image signal processing device and an image signal processing method in which an image is displayed in a normal mode to select whether an image data is deleted or not when deletion is instructed, for example, in a magnification/reproduction mode.

According to an embodiment of the present invention, there is provided an image signal processing device including: image data generating means for generating first reproduction image data displayed at the time of normal reproduction and second reproduction image data displayed in a display form different from that used at the time of the normal reproduction by performing a predetermined process on original image data or the first reproduction image data; displaying means for selectively displaying the first reproduction image data and the second reproduction image data; and controlling means for allowing the first reproduction image data to be displayed on the displaying means and allows the original image data to be in a deletable state, when the second reproduction image data is displayed on the displaying means and deletion is instructed.

According to another embodiment of the present invention, there is provided an image signal processing method including the steps of: generating first reproduction image data displayed at the time of normal reproduction and second reproduction image data displayed in a display form different from that used at the time of the normal reproduction by performing a predetermined process on original image data or the first reproduction image data; displaying the second reproduction image data; and allowing the first reproduction image data to be displayed and allowing the original image data to be in a deletable state, when the second reproduction image data is displayed in the displaying step and deletion is instructed.

According to the approach described herein, it is possible to check image data in a normal reproduction mode and perform a deleting process, without increasing the number of manipulating steps, even when the image data is magnified and reproduced, for example, in a magnification/reproduction mode. Accordingly, it is possible to prevent the image data from being deleted by mistake.

The invention will now be described by way of example with reference to the accompanying drawings, throughout which like parts are referred to by like references, and in which:
Fig. 1 is a block diagram showing a configuration of a pickup device according to an embodiment of the present invention.
Fig. 2 is a schematic diagram showing a configuration of one side of a case body of the pickup device according to an embodiment of the present invention.
Fig. 3 is a schematic diagram showing a process for generating reproduction image data and magnification image data according to an embodiment of the present invention.
Fig. 4 is a schematic diagram showing a display form of a LCD when performing a deleting process according to an embodiment of the present invention.
Fig. 5 is a flowchart showing a process when performing the deleting process according to an embodiment of the present invention.

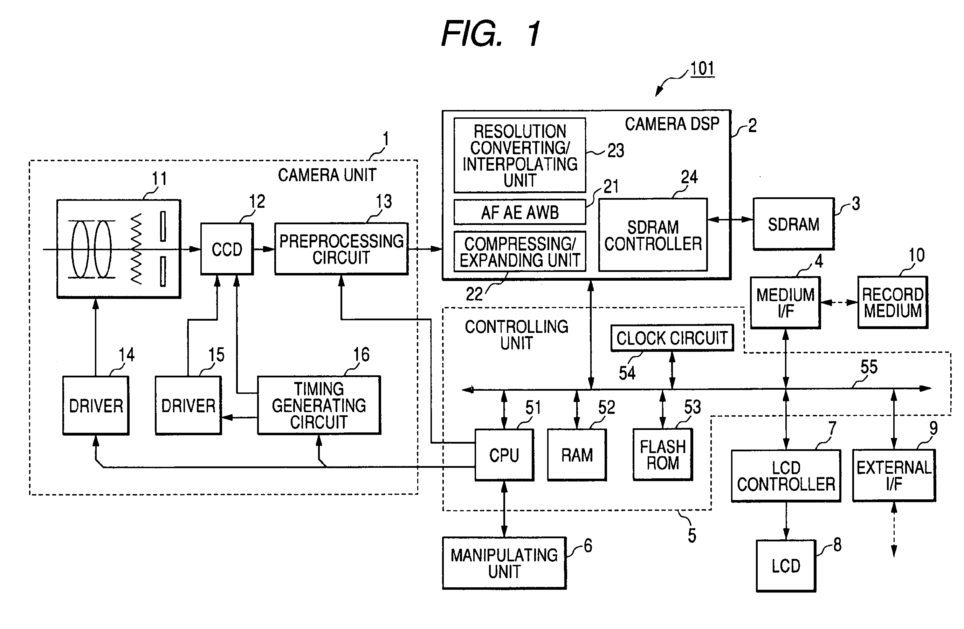

Fig. 1 is a block diagram showing a configuration of a pickup device 101 according to an embodiment of the present invention. The pickup device 101 includes a camera unit 1, a camera digital signal processor (DSP) 2, a synchronous dynamic random access memory (SDRAM) 3, a medium interface (hereinafter, referred to as medium I/F) 4, a controlling unit 5 as an example of the controlling means, a manipulating unit 6, a LCD controller 7, a LCD 8 which is a displaying unit, and an external interface (hereinafter, referred to as external I/F) 9. A record medium 10 can be attached/detached to/from the pickup device 101.

The record medium 10 may be a memory card using a semiconductor memory, an optical record medium such as a recordable digital versatile disc (DVD) or recordable compact disc (CD), a magnetic disc or the like. In the record medium 10, plural pieces of image data which is compression-coded in a joint photographic coding expert group (JPEG) format based on an image file format called exchange image file format (Exif) is recorded according a design rule camera file system (DCF).

The configuration of each unit will be described in detail. The camera unit 1, as shown in Fig. 1, includes an optical block 11, a charge coupled device (CCD) 12 which is an example of a pickup element, a preprocessing circuit 13, an optical block driver 14, a CCD driver 15, and a timing generating circuit 16. The optical block 11 includes a lens, a focus mechanism, a shutter mechanism, and a diaphragm (iris) mechanism. As the pickup element, a complementary metal oxide semiconductor (CMOS) sensor may be used instead of the CCD.

The controlling unit 5 is a microcomputer in which a central processing unit (CPU) 51, a random access memory (RAM) 52, a flash read only memory (ROM) 53 and a clock circuit 54 are connected to one another through a system bus 55. The controlling unit 5 controls the respective units of the pickup device 101.

The RAM 52 is used as an operation region used when the CPU 51 executes a program or an operation region used for temporarily storing a halfway result of the processing. The flash ROM 52 stores a variety of programs executed in the CPU 51 or data required for processes. The clock circuit 54 can provide current date, current day of week, current time or photographed date and time.

When an image is photographed, the optical block driver 14 generates a driving signal for the optical block 11 according to the control of the controlling unit 5 and supplies the driving signal to the optical block 11 to operate the optical block 11. In the optical block 11, the focus mechanism, the shutter mechanism and the diaphragm mechanism are controlled by the driving signal received from the driver 14. The optical block 11 receives the image of a subject and supplies the image to the CCD 12.

The CCD 12 photoelectrically converts and outputs the image output from the optical block 11. The CCD 12 operates according to a driving signal output from the CCD driver 15 and receives the image of the subject from the optical block 11. The CCD 12 converts the received image (image information) of the subject into an electric signal and supplies the electric signal to the preprocessing circuit 13, based on a timing signal output from the timing generating circuit 16 controlled by the controlling unit 5.

The timing generating circuit 16 generates the timing signal for supplying a predetermined timing according to the control of the controlling unit 5. The CCD driver 15 generates the driving signal supplied to the CCD 12 based on the timing signal output from the timing generating circuit 16.

The preprocessing circuit 13 performs a correlated double sampling (CDS) process on the received electric signal of the image information to remove reset noise, I/F noise and thermal resistance noise such that a good S/N ratio is maintained. The preprocessing circuit 13 also performs an automatic gain control (AGC) process to control a gain and performs an analog/digital (A/D) converting process to generate digitalized image data.

The digitalized image data output from the preprocessing circuit 13 is supplied to the DSP 2. The DSP 2 includes a digital signal processing unit 21, a compressing/expanding unit 22, a resolution converting/interpolating unit 23 which is an example of the image data generating unit, and a SDRAM controller 24 for controlling the SDRAM 3. The digital signal processing unit 21 performs a camera signal process, such as auto focus (AF), auto exposure (AE) and auto white balance (AWB), on the image data supplied to the DSP 2. The processed image data is compression-coded in the compressing/expanding unit 22, for example, in a JPEG format and supplied to and recorded in the record medium 10 mounted in the pickup device 101 through the system bus 55 and the medium I/F 4.

Among the image data recorded in the record medium 10, desired image data is read from the record medium 10 through the medium I/F 4 and supplied to the DSP 2, according to a manipulation input of a user, which is received through the manipulating unit 6 including a touch panel or a control key.

The compressing/expanding unit 22 of the DSP 2 expands the compressed image data which is read from the record medium 10 and supplied through the medium I/F 4 and, if necessary, the resolution converting/interpolating unit 23 performs a resolution converting process on the image data to generate reproduction image data. The generated reproduction image data is supplied to the LCD controller 7 through the system bus 55. The LCD controller 7 drives a LCD drive circuit according to the supplied image data. Accordingly, an image is displayed on the LCD 8 based on the image data recorded in the record medium 10.

An image display format depends on a display processing program recorded in the ROM. That is, the display processing program is a program on how a file system is recorded or the image is reproduced.

In the pickup device 101 according to one embodiment of the present invention, the external I/F 9 is provided. The pickup device 101 is, for example, connected to an external personal computer through the external I/F 9 such that image data is received from the personal computer and recorded in the mounted record medium 10 or image data recorded in the mounted record medium 10 is supplied to the external personal computer.

By connecting the external I/F 9 to a communication module, the pickup device 101 is connected to a network such as Internet such that various image data or the other information is acquired through the network and recorded in the record medium 10 or image data recorded in the record medium 10 is transmitted to a desired receiving side through the network.

The information such as the image data which is acquired through the external personal computer or the network and recorded in the record medium 10 is also read and reproduced by the pickup device 101 and displayed on the LCD 8, thereby allowing the user to use the information.

The external I/F 9 may be a wired interface such as institute of electrical and electronics engineers (IEEE) 1394 or universal serial bus (USB) or a wireless interface using light or electric wave. That is, the external I/F 9 may be any one of the wired and wireless interfaces.

The pickup device 101 according to one embodiment of the present invention can photograph the image of the subject and record the image in the record medium 10 mounted in the pickup device 101 and can read the image data recorded in the record medium 10 and reproduce and use the image data. In addition, the pickup device 101 can receive the image data through the external personal computer or the network and record the image data in the record medium 10 or read and reproduce the image data.

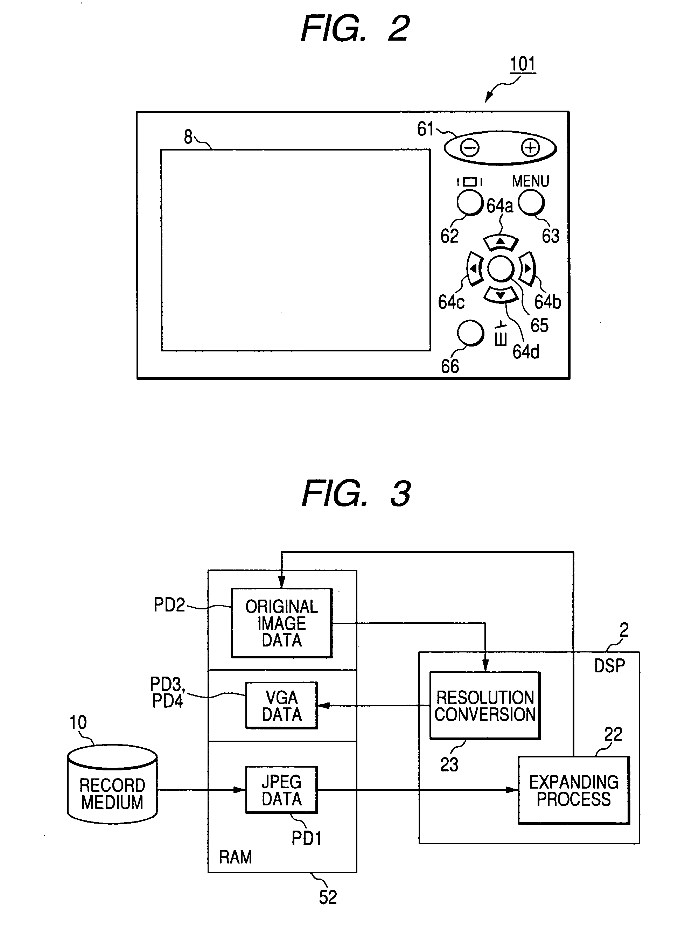

Fig. 2 shows an example of the manipulating unit 6 and the LCD 8 disposed on a rear surface of a case body of the pickup device 101 according to one embodiment of the present invention. On the rear surface of the case body of the pickup device 101, the LCD 8 and the manipulating unit 6 including a plurality of keys in the vicinity of the LCD 8 are provided. The manipulating unit 6 includes a zoom key 61, a screen key 62 for turning on/off the display of the LCD 8, and a menu key 63 for displaying a menu screen on the LCD 8. The manipulating unit 6 further includes directional keys 64a to 64d, a decision key 65 located at the central portion of the directional keys 64a to 64d and a deletion key 66 for performing a deleting process. The manipulating unit 6 shown in Fig. 2 is only an example and the positions and the kind of the keys are not limited to this example. The LCD 8 may be formed of a touch panel, which performs a variety of operations by touching predetermined positions of the LCD 8.

Next, in the pickup device 101, a process for displaying the image data recorded in the record medium 10 on the LCD 8 will be described.

According to one embodiment of the present invention, the image data which is recorded in the removable record medium 10 or stored in a non-volatile memory mounted in the pickup device is referred to as original image data. First reproduction image data which is generated by, if necessary, performing the resolution converting process on the original image data so as to be displayed on the displaying unit included in the pickup device is referred to as reproduction image data. A mode for displaying the reproduction image data on the LCD 8 is referred to as a normal reproduction mode. When the reproduction image data is displayed, the user can confirm the entire contents of the image through the LCD 8.

The reproduction image data is obtained by performing the resolution converting process on the original image data so as to be suitable to the display region of the displaying unit. The reproduction image data and the original image data are identical to each other in image contents and different from each other in image size. Accordingly, since the deleting process is performed while viewing the displayed reproduction image data and the original image data in the record medium 10 is deleted, it is possible to suppress the deleting process which is not intended by the user from being performed.

Image data which is displayed in a display form different from that of the reproduction image data displayed in the normal reproduction mode is second reproduction image data. The second reproduction image data is generated by performing a predetermined process on the original image data or the reproduction image data. According to one embodiment of the present invention, the second reproduction image data is obtained by magnifying and displaying a portion of the reproduction image data and thus is referred to as magnification image data. A mode for displaying the magnification image data on the LCD 8 is referred to as a magnification reproduction mode.

Fig. 3 schematically shows a process for generating the reproduction image data and the magnification image data using the original image data. When the manipulating unit 6 is manipulated and the normal reproduction mode is instructed, the CPU 51 reads the original image data PD1 compressed in the JPEG format from the record medium 10 and stores the original image data in the RAM 52. The original image data PD1 is supplied to the DSP 2 and subjected to an expansion process by the compressing/expanding unit 22 of the DSP 2, and the expanded original image data PD2 is stored in a predetermined region of the RAM 52.

The original image data PD2 is supplied to the DSP 2, subjected to the resolution converting process by the resolution converting/interpolating unit 23 of the DSP 2, and subjected to a non-magnification process (magnification ratio is 1), thereby generating reproduction image data PD3. Since the image size of the original image data PD2 is changed depending on a file, the resolution converting/interpolating unit 23 performs the resolution converting process on the original image data PD2 to be suitable to the display region of the LCD 8, thereby changing the image size. For example, the reproduction image data PD3 having a VGA (horizontal direction: 640 pixels, vertical direction: 480 pixels) size or a QVGA (horizontal direction: 320 pixels, vertical direction: 240 pixels) size is generated. When the image size of the original image data PD2 is equal to the size of the display region of the LCD 8, the resolution converting process is not performed.

The reproduction image data (for example, VGA data) PD3 is stored in a predetermined region of the RAM 52. The CPU 51 reads the reproduction image data PD3 stored in the RAM 52 and supplies the reproduction image data PD3 to the LDC controller 7. The LCD controller 7 drives the LCD drive circuit according to the supplied reproduction image data PD3 and displays the reproduction image data PD3 on the LCD 8. Accordingly, a display process is performed in the normal reproduction mode.

In the magnification reproduction mode, the following process is performed. When the magnification reproduction mode is instructed in a state that the reproduction image data PD3 is displayed, a region of the displayed reproduction image data PD3, which will be magnified, is specified and a magnification ratio is set. For example, the magnification ratio is set, for example, by manipulating the zoom key 61. The size of a cut-out region of the reproduction image data PD3 is, for example, the size of a region divided into nine. The region can be properly specified using the directional keys 64a to 64d and the decision key 65 while viewing the reproduction image data PD3 displayed on the LCD 8.

The CPU 51 reads the expanded original image data PD2 stored in the RAM 52 and supplies the original image data PD2 to the resolution converting/interpolating unit 23 of the DSP 2. The resolution converting/interpolating unit 23 generates the reproduction image data PD3 from the original image data PD2. A specified region of the reproduction image data PD3 is cut out and the cut-out image is magnified with a magnification ratio set by the CPU 51 and then interpolated to be suitable to the display region of the LCD 8, thereby generating magnification image data PD4. The CPU 51 reads the magnification image data PD4 stored in the RAM 52 and supplies the magnification image data PD4 to the LCD controller 7.

The LCD controller 7 drives the LCD driver circuit according to the supplied magnification image data PD4 and displays the magnification image data PD4 on the LCD 8. Accordingly, the magnification display is performed in the magnification reproduction mode. The reproduction image data PD3 may be held in the RAM 52 such that the magnification image data PD4 is generated using the held reproduction image data PD3, without generating the reproduction image data PD3, in the magnification reproduction mode. To this end, the reproduction image data PD3 and the magnification image data PD4 are selectively displayed on the LCD 8 according to the mode.

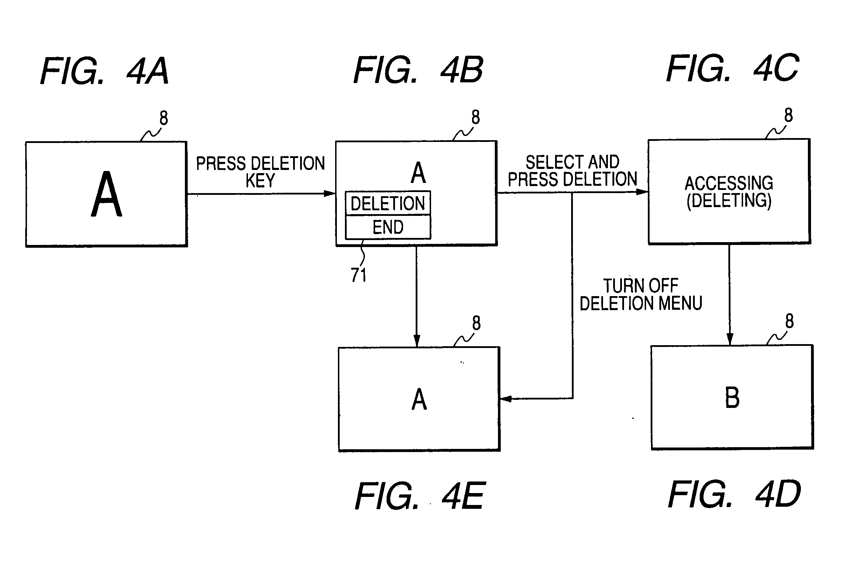

Subsequently, when the magnification reproduction mode is performed, the deleting process on the original image data recorded in the record medium 10 will be described with reference to Fig. 4. In a state shown in Fig. 4A, a character "A" is magnified and displayed on the LCD 8 in the magnification reproduction mode.

In this state, the deletion key 66 provided in the pickup device 101 is pressed to instruct the deletion, as shown in Fig. 4B, the reproduction image data "A" of which is not magnified is displayed on the LCD 8 instead of the magnification display. In addition, the deletion menu 71 is simultaneously displayed on the LCD 8.

When the deletion key 66 is pressed, since the reproduction image data which is not magnified is displayed before the deleting process is performed, it is possible to check the entire contents of the image and to determine whether the original image data is deleted or not. In the deletion menu 71, a process to be performed is determined by selecting "deletion" or "end" using, for example, the directional key 64a and the directional key 64d and pressing the decision key 65. When the LCD 8 is the touch panel, the "deletion" or "end" may be determined by touching any one of the displayed deletion menu 71.

When the "deletion" of the deletion menu 71 is selected in a state shown in Fig. 4B, the display of the LCD 8 transits to a state shown in Fig. 4C. In the state shown in Fig. 4C, for example, character information such as "accessing" or "deleting" is displayed. In this state, the CPU 51 accesses to the original image data recorded in the record medium 10 through the medium I/F 4, for example, using a file name and the like and deletes the original image data. At this time, the compressed original image data, the expanded original image data, the reproduction image data, all of which are stored in the RAM 52, may be simultaneously deleted.

After the deleting process is finished, next original image data recorded in the record medium 10 is read. Then, reproduction image data is generated by the above-described process and displayed on the LCD 8. In the state shown in Fig. 4D, for example, a non-magnified character "B" is displayed. When the next original image data does not exist in the record medium 10, a message that an image to be displayed does not exist is displayed on the LCD 8.

In the state shown in Fig. 4B, when the "end" of the deletion menu 71 is selected, the deleting process is not performed and the display of the LCD 8 transits to the state shown in Fig. 4E. When the LCD 8 is in the state shown in Fig. 4E, the deletion menu disappears and the non-magnified character "A" is continuously displayed. At this time, "A" is displayed in the magnification reproduction mode, instead of the normal production mode.

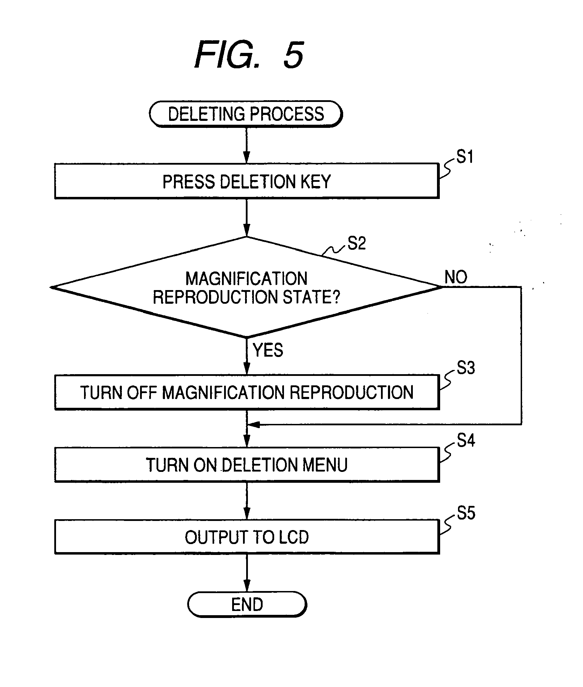

Fig. 5 is a flowchart showing a display operation for the deleting process according to one embodiment of the present invention. The following process is, for example, realized by the CPU 51. In a step S1, when the deletion key 66 is pressed in order to perform the deleting process, the deleting process begins. When the deleting process begins, the process progresses to a step S2.

In the step S2, it is determined whether the image displayed on the LCD 8 is in the magnification reproduction state or not. This determination is performed by determining whether the information of the operation mode controlled by the CPU 51 is the normal reproduction mode or the magnification reproduction mode. When the image is in the normal reproduction mode rather than the magnification reproduction mode, the process progresses to a step S4. When the image is in the magnification reproduction mode, the process progresses to a step S3.

In the step S3, magnification reproduction is turned off. In the step S3, the reproduction image data displayed on the LCD 8 is generated. The CPU 51 reads the expanded original image data stored in the RAM 52 and supplies the expanded original image data to the resolution converting/interpolating unit 23 of the DSP 2, thereby generating the reproduction image data. The generated reproduction image data is stored in the RAM 52.

Subsequently, the process progresses to the step S4. In the step S4, the deletion menu which is the selection display is generated. When the deletion key 66 is pressed, the CPU 51 receives a generated deletion instructing signal and generates the deletion menu which is displayed on the LCD 8.

Subsequently, the process progresses to a step S5. In the step S5, the reproduction image data generated in the step S3 and the deletion menu generated in the step S4 are displayed on the LCD 8 in a superimposed manner and the process is then finished.

The order of the step S3 and the step S4 may be reversed. However, since the time required for performing the step of generating the reproduction image data of the normal reproduction mode is longer than that required for performing the step of generating the deletion menu, the deletion menu is preferably maintained during the reproduction image data is generated. Accordingly, as described above, it is preferable that the deletion menu is generated after the reproduction image data is generated.

Although one embodiment of the present invention has been described in detail, the present invention is not limited to the embodiment and may be modified in accordance with the understanding of the skilled person. Although, in the above-described embodiment, the original image data read from the record medium is stored in the RAM 52, the original image data may be directly supplied to the DSP 2 and then processed. In the DSP 2, the expanding process and the resolution converting process may be simultaneously performed. The compression format is not limited to JPEG, and JPEG2000 using wavelet conversion may be used.

The approach described herein is applicable to a pickup device such as a digital video camera or a digital still camera, a mobile phone having a pickup function, a personal digital assistant (PDA), or an image browsing device called an image view having no a pickup function.

Although, in the above-described embodiment, the magnification image data is described as an example of the second reproduction image data, the approach described herein is applicable to the other image data. For example, as the second reproduction image data, reduction image data obtained by reducing the reproduction image data, rotation image data obtained by rotating the reproduction image data by a predetermined angle, modification image data obtained by modifying a portion of the reproduction image data, image data obtained by correcting the gradation or the color of the reproduction image data or image data obtained by extracting the contour of the reproduction image data may be used. In the image data generating unit, the second reproduction image data is generated.

The resolution converting process may be directly performed using the compressed original image data. For example, when the original image data is compression-coded in the JPEG format, the resolution converting process may be performed by adding a zero (0) value to a discrete cosine transform (DCT) coefficient of the DCT which is an orthogonal transform used for JPEG or selecting the DCT coefficient of low frequencies and performing inverse DCT to correct brightness, if necessary.

The respective units for configuring an image signal processing device according to the approach described herein may be realized by a dedicated hardware circuit or a programmed computer. An image signal processing method according to the approach described herein may be realized by software (program) for operating a computer or a dedicated hardware circuit. A program including processing contents may be recorded in a computer-readable record medium such as a magnetic record device, an optical disc, a magneto-optical disc, a semiconductor memory.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

It should be understood by those skilled in the art that various modifications, combinations, sub-combinations and alterations may occur depending on design requirements and other factors insofar as they are within the scope of the appended claims and the equivalents thereof.

## Claims

1. An image signal processing device comprising:
image data generating means for generating first reproduction image data displayed at the time of normal reproduction and second reproduction image data displayed in a display form different from that used at the time of the normal reproduction by performing a predetermined process on original image data or the first reproduction image data;
displaying means for selectively displaying the first reproduction image data and the second reproduction image data; and
controlling means for allowing the first reproduction image data to be displayed on the displaying means and allows the original image data to be in a deletable state, when the second reproduction image data is displayed on the displaying means and deletion is instructed.

2. The image signal processing device according to Claim 1, wherein the second reproduction image data is obtained by magnifying and displaying a portion of the first reproduction image data.

3. The image signal processing device according to Claim 1, wherein the predetermined process includes a process for cutting out a portion of the first reproduction image data and performing interpolation on cut-out image data.

4. The image signal processing device according to Claim 1, wherein the deletable state is a state that selection display for selecting deletion of the original image data is displayed on the displaying means together with the first reproduction image data.

5. The image signal processing device according to Claim 1, wherein the controlling means allows the first reproduction image data to be continuously displayed when the original image data is not deleted and allows reproduction image data different from the first reproduction image data to be displayed on the displaying means or allows a message that reproduction image data to be displayed does not exist to be displayed on the displaying means, when the original image data is deleted.

6. An image signal processing method comprising the steps of:
generating first reproduction image data displayed at the time of normal reproduction and second reproduction image data displayed in a display form different from that used at the time of the normal reproduction by performing a predetermined process on original image data or the first reproduction image data;
displaying the second reproduction image data; and
allowing the first reproduction image data to be displayed and allowing the original image data to be in a deletable state, when the second reproduction image data is displayed in the displaying step and deletion is instructed.

7. The image signal processing method according to Claim 6, wherein the second reproduction image data is obtained by magnifying and displaying a portion of the first reproduction image data.

8. The image signal processing method according to Claim 6, wherein the predetermined process includes a process for cutting out a portion of the first reproduction image data and performing interpolation on cut-out image data.

9. The image signal processing method according to Claim 6, wherein the deletable state is a state that selection display for selecting deletion of the original image data is displayed together with the first reproduction image data.

10. The image signal processing method according to Claim 6, wherein the controlling step further includes allowing the first reproduction image data to be continuously displayed when the original image data is not deleted and allowing reproduction image data different from the first reproduction image data to be displayed or allowing a message that reproduction image data to be displayed does not exist to be displayed, when the original image data is deleted.

11. An image signal processing device comprising:
an image data generating unit which generates first reproduction image data displayed at the time of normal reproduction and second reproduction image data displayed in a display form different from that used at the time of the normal reproduction by performing a predetermined process on original image data or the first reproduction image data;
a displaying unit which selectively displays the first reproduction image data and the second reproduction image data; and
a controlling unit which allows the first reproduction image data to be displayed on the displaying unit and allows the original image data to be in a deletable state, when the second reproduction image data is displayed on the displaying unit and deletion is instructed.
